# EUROPEAN PATENT SPECIFICATION

(11) **EP 3 251 565 B1**
(45) Date of publication and mention of the grant of the patent: **27.11.2019**
(21) Application number: 17174113.5
(22) Date of filing: 01.06.2017
(51) Int. Cl.: A47J 37/06

(54) **BARBECUE FOR COOKING FOOD**
GRILL ZUM KOCHEN VON LEBENSMITTELN
BARBECUE POUR LA CUISSON D'ALIMENTS

(30) Priority: 01.06.2016 IT UA20169958 U
(43) Date of publication of application: 06.12.2017
(73) Proprietor: SMEG S.p.A., 42016 Guastalla (IT)
(72) Inventor: TAGA, Bujar, 42016 GUASTALLA (IT)
(74) Representative: Martini, Gabriele

(56) References cited:
- EP-A1- 2 679 121
- FR-A1- 2 368 254
- FR-A1- 2 713 466
- GB-A- 1 319 920
- US-A- 4 787 364

## Description

The present invention relates to a barbecue for cooking food.

In particular, the present invention relates to a barbecue comprising devices for conveying and collecting the grease generated during cooking of the food.

To carry out cooking of the food with a barbecue it is necessary to arrange a cooking surface above a box shape body that houses inside it a combustible heat source, for example embers or gas burners.

By the term "cooking surface" is meant a grill, a plate or also the succession of one or more grills with one or more plates set alongside one another.

Cooking or heating of the food with a barbecue is obtained via conduction of the heat transmitted to the food by the cooking surface heated by the heat source. Cooking can also be obtained by convection of heat in the case where the cooking surface, usually a grill, is provided with openings to allow the hot air and combustion smokes to pass through the cooking surface itself and lap the food directly.

As is known, in cooking with a barbecue food containing fat releases part of its fat in the form of grease that drips onto the cooking surface.

To prevent the grease that drips from remaining on the cooking surface, a factor that not only jeopardizes proper cooking of the food but may moreover lead the grease to come into contact with the heat source and thus generate harmful flames, according to the known art, the box shaped body is configured for supporting the cooking surface in a slightly inclined way with respect to a horizontal plane defined by the ground.

In this way, the grease that drips tends spontaneously to flow towards the edge of the cooking surface set at a lower height. To facilitate this natural flow the top face of grills may present a plurality of parallel channels having axes directed towards the edge of the grill set at a lower height.

Once the grease has been directed towards the lower edge of the cooking surface, it is necessary to intercept it to prevent it from dripping from the lower edge of the cooking surface onto the heat source or in any case towards areas of the box shaped body that are difficult to reach.

To achieve the above purpose it is today known to provide the barbecue at the lower edge of the cooking surface with tanks for collecting grease or conveyors for conveying the grease towards lateral tanks.

The patent US4608917 describes an example of a barbecue provided with a tank for collecting the grease where the tank for collecting of the grease is set facing the lower edge of a grill. In this way, the dripping grease is spontaneously collected in the tank coming out of the lower edge of the inclined grill. According to the patent US4608917 the tank for collecting the grease may be removable with respect to the box shaped body to enable easy and periodic cleaning thereof. According to the patent US4608917 the tank is associated externally to the box shaped body. This configuration enables in fact the tank to remain protected with respect to the heat source and hence prevents overheating that might render moving of the tank itself more dangerous.

The international patent application WO2008125258 describes an example of a barbecue provided with a removable tank for collecting the grease, where the tank is housed within the box shaped body. Even though this configuration affords a solution that is more attractive from an aesthetic standpoint, where the grease and the corresponding tank are not in view, the tank is, however, exposed to potential overheating that might render it more difficult to remove by hand.

To get round the above drawback the barbecue according to WO2008125258 is provided with an inner wall that functions as heat shield for the tank. This heat shield isolates the tank from the heat source providing air gaps present both between the tank and the heat shield and between the tank and the wall of the box shaped body.

EP2679121 discloses a cooking assembly comprising one or more grill plates positioned over a heat source and a liquid collection tray positioned to collect liquids generated during the cooking process on said grill plates and direct said liquids away from said grill plates and said heat source to a collection reservoir for disposal thereof.

Starting from this prior art, a purpose of the present invention is to provide a barbecue having an alternative system for conveying and collecting the grease that is created during cooking of the food.

According to the present invention, a barbecue is provided comprising at least one cooking surface that rests on a box shaped body in such a way as to define and delimit a combustion chamber that houses a heat source. The cooking surface is supported by the box shaped body in a position inclined with respect to a horizontal plane in such a way as to identify a raised edge, at a greater height, and a lower edge, at a lower height. Inside the box shaped body the barbecue further comprises a grease conveyor chute associated laterally to the edge of the cooking surface arranged at a lower height for receiving the grease and at the front to a tank for draining off grease. At least one portion of the grease conveyor chute is set freely facing the heat source so as to deflect and convey the heat and the combustion smokes towards the cooking surface.

In this way, the tank for collecting the grease is not adjacent to the cooking surface and is set at a distance from the heat source (in the example shown it is positioned laterally) such as not to be subject to overheating that might vitiate manual manoeuvrability thereof. Even though the tank is not set in a position corresponding to the lower edge of the cooking surface, there is in any case no danger of the grease solidifying during flow along the conveyor chute thanks to the fact that the chute itself is set at least in part freely facing the heat source. In fact, according to the invention, the heat and the combustion smokes that lap the conveyor chute, the smokes being deflected and conveyed towards the cooking surface increasing the cooking capacity of the barbecue by convection, heat the conveyor chute itself in such a way that the grease flowing therein maintains a fluid behaviour.

According to the invention, the grease conveyor chute is removable.

According to the invention, the grease conveyor chute comprises an inclined side wall for receiving the grease coming out of the cooking surface, a vertical side wall, and a chute base closed at the back by a vertical rear wall and open at the front and set facing the tank. The chute base is inclined both towards the tank and towards the inside of the box shaped body so as to define a groove for collecting the grease and draining it off. In this way, the grease deposited on the conveyor chute is collected in the internal portion thereof that is most affected by heating.

According to the invention, the vertical side wall of the grease conveyor chute is in contact with a wall of the box shaped body. In this way, a greater structural stiffness is bestowed on the grease conveyor chute, which is supported at the bottom only by the brackets spaced apart that provide resting ribs.

According to the invention, at least the inclined side wall of the grease conveyor chute is set freely facing the heat source so as to deflect and convey the heat and the combustion smokes towards the cooking surface.

In particular, the grease conveyor chute is kept in position by resting on at least two supporting brackets set at a distance apart from one another.

In this way, practically the entire lateral surface of the conveyor chute is freely lapped by the heat and by the combustion smokes, thus optimizing transfer of heat by conduction towards the grease that flows along the chute and that must be kept hot and fluid.

Further characteristics and advantages of the present invention will emerge clearly from the ensuing description of a non-limiting example of embodiment thereof, with reference to the annexed drawings, wherein:
- Figure 1 is a schematic perspective view of a barbecue provided according to the present invention;
- Figure 2 is a schematic perspective view of the barbecue of Figure 1 from which some walls of the box shaped body have been removed to highlight the grease conveyor chute and the corresponding lateral tank for collecting the grease;
- Figure 3 is an enlarged schematic view of the barbecue of Figure 2, which highlights the configuration of the grease conveyor chute and its relative positioning with respect to the cooking surface, to the walls of the box shaped body, and to the heat source; and
- Figure 4 is an enlarged schematic view of the barbecue of Figure 3, where the grease conveyor chute has been removed to highlight the structures for supporting the chute itself.

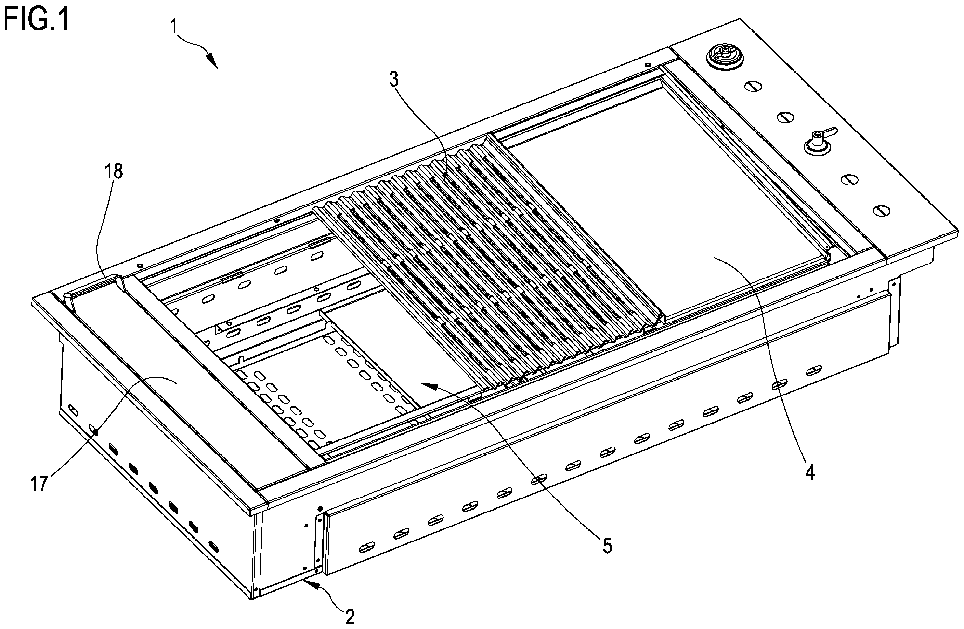

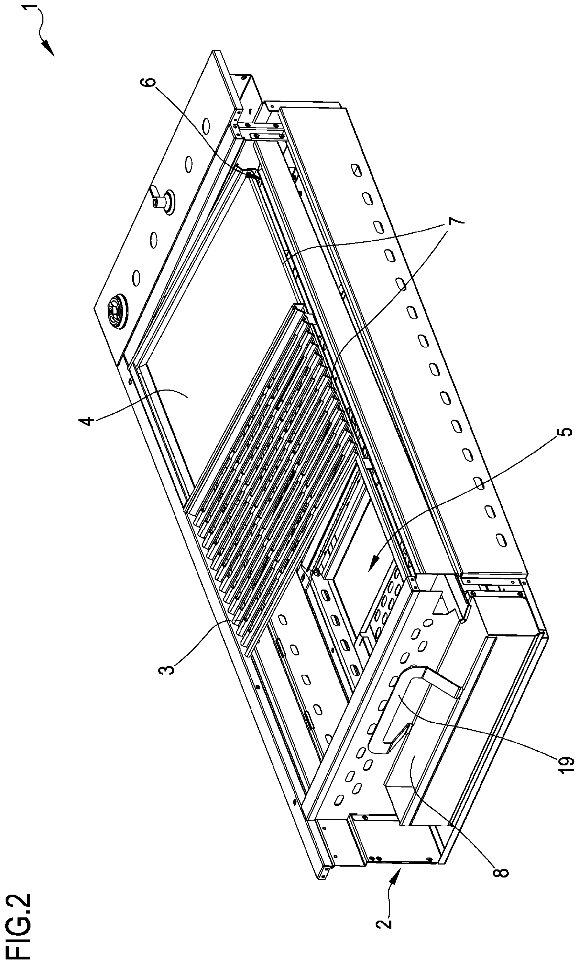

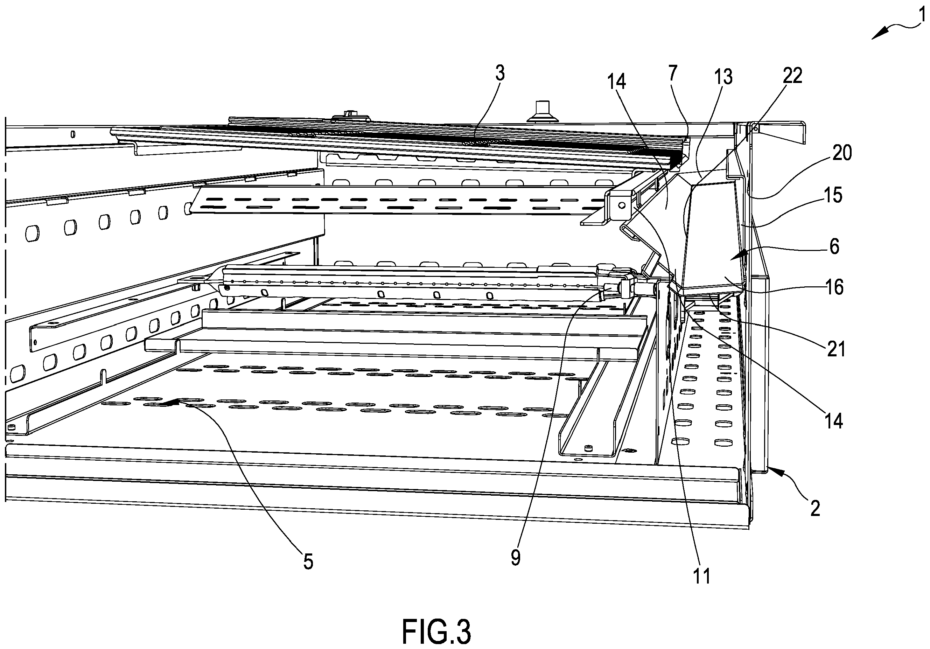

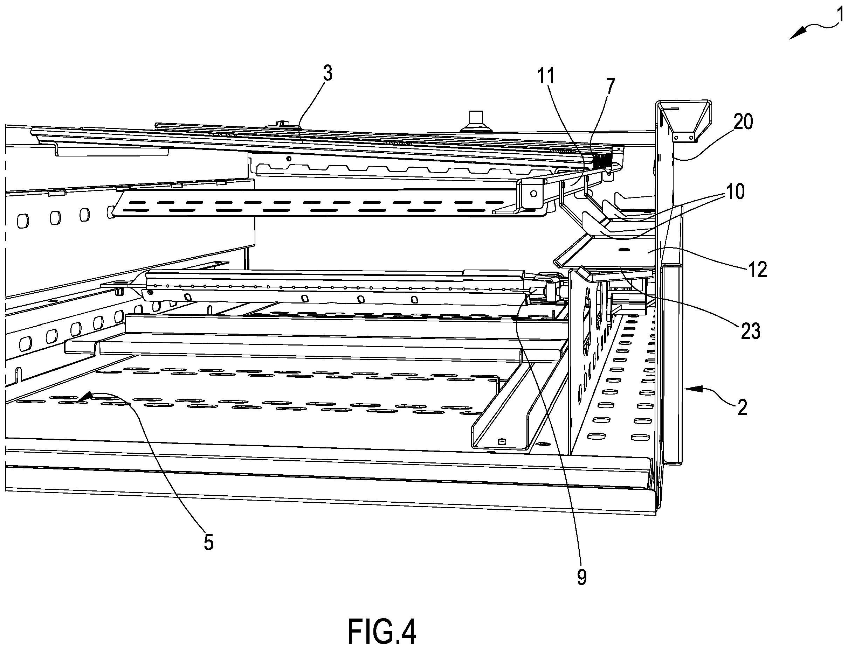

In Figures 1-4 designated by the reference number 1 is a barbecue for cooking food provided according to the present invention.

This barbecue 1 comprises a box shaped body 2 and at least one cooking surface 3, 4. In the example represented, the cooking surface comprises a grill 3 and a plate 4. For simplicity, in the sequel of the present description, by the term "cooking surface" is meant a grill 3, a plate 4, or the succession of one or more grills 3 with one or more plates 4 set alongside one another.

The box shaped body 2 and the cooking surface 3, 4 that rests thereon define and delimit a combustion chamber 5 that houses inside it a heat source 9.

For convenience, in the attached drawings, the heat source 9 is represented schematically with part of a gas burner but, for the purposes of the present invention, the heat source may be constituted by embers or other equivalent heat sources.

As is known, the cooking surface 3, 4 is supported by the box shaped body 2 in an inclined position with respect to a horizontal plane, for example the one defined by the ground, by means of supporting cross-members 11. In this way, the cooking surface 3, 4 has a raised edge, i.e., at a greater height, and a lower edge 7, i.e., at a lower height.

The inclined conformation of the cooking surface 3, 4 enables the grease that drips during cooking to migrate spontaneously towards the lower edge 7. In the case where the cooking surface 3, 4 comprises a grill 3, the top face of the latter may present a plurality of parallel channels having axes directed towards the lowered edge 7.

Within the box shaped body 2 the barbecue 1 further comprises a grease conveyor chute 6 associated laterally to the lower edge 7 of the cooking surface 3, 4 in order to receive the grease and at the front to a tank 8 in order to drain the grease off.

By the term "associated" is meant that the ends of the grease conveyor 6 are in a position such as to co-operate with the cooking surface 3, 4 and the tank 8, respectively for receiving and delivering the grease safely.

Hence, with the grease conveyor chute 6 thus arranged, on the one hand it spontaneously receives the grease dripping from the lower edge 7 of the cooking surface 3, 4 and on the other hand it directs the grease in an equally spontaneous way towards the tank 8.

In order to heat the grease flowing towards the tank 8 and keep it in the fluid state, at least one portion of the grease conveyor chute 6 is set freely facing the heat source 9 and directly deflects and conveys the heat and the combustion fumes towards the bottom face of the cooking surface 3, 4.

The tank 8, which in the example shown is set alongside the heat source, is of the type that is removable and can be handled easily thanks to the corresponding handle 19 and is accessible by means of a mobile lid 17, which is in turn provided with a handle 18.

The grease conveyor chute 6 comprises an inclined side wall 14 for receiving the grease dripping from the lower edge 7 of the cooking surface 3, 4, a vertical side wall 15, and a chute base 16. The chute base 16 is closed at the back by a vertical rear wall 13, whereas at the front is open and faces the lateral tank 8. The chute base 16 is inclined with respect to the horizontal plane of the ground in such a way as to identify a raised rear edge, connected to the vertical rear wall 13, and a lower front edge 21 set facing the lateral tank 8. The chute base 16 is moreover inclined with respect to the horizontal plane of the ground in such a way as to identify a raised lateral edge connected to the vertical side wall 15 and a lower lateral edge connected to the inclined side wall 14.

Said double inclination of the chute base 16, towards the lateral tank 8 and towards the inside of the box shaped body 2, defines a preferential groove 22 for collecting and draining off the grease, which is set facing the heat source 9.

In addition to the tank 8, also the grease conveyor chute 6 is removable to facilitate cleaning thereof.

In particular, in fact, the grease conveyor chute 6 only rests on at least two supporting brackets 10, which function as resting ribs, set at a distance apart from one another, which are in turn constrained on one side to the cross-member 11 for supporting the cooking surface 3, 4 and on another side to a horizontal supporting cross-member 12. Since the grease conveyor chute 6 has inclined walls, also the brackets 10 have profiles complementary to the inclined conformation of the inclined side wall 14 and of the chute base 16.

The horizontal supporting cross-member 12 may be advantageously constrained to an internal step 23 of the box shaped body 2 already present in known barbecues and designed to house the devices necessary for lighting and supply of the burners 9.

Finally, to provide greater stability on the grease conveyor chute 6, the vertical side wall 15 of the latter is in contact with a vertical wall of the box shaped body 2.

It is evident that modifications and variations may be made to the barbecue described herein, without departing from the sphere of protection of the annexed claims.

## Claims

1. A barbecue (1) for cooking food; the barbecue (1) comprising:
- a box-shaped body (2);
- at least one cooking surface (3, 4), which rests on the box-shaped body (2) and is supported in a position inclined with respect to a horizontal plane in such a way as to identify a raised edge and a lower edge (7);
- a combustion chamber delimited by the box-shaped body (2) and by the cooking surface (3, 4);
- a heat source (9) housed in the combustion chamber (5); and
- a grease conveyor chute (6), which is housed in the box-shaped body and is associated laterally to the lower edge (7) of the cooking surface (3, 4) for receiving the grease and at the front to a tank (8) for draining off the grease; the grease conveyor chute (6) has a portion set freely facing the heat source (9) so as to deflect and convey the heat and the combustion smokes towards the cooking surface (3, 4);
wherein the grease conveyor chute (6) is removable;
wherein the grease conveyor chute (6) comprises an inclined side wall (14) for receiving of the grease coming from the cooking surface (3, 4), a vertical side wall (15), and a chute base (16) closed at the back by a vertical rear wall (13) and open at the front and set facing the lateral tank (8); **characterised in that**
the vertical side wall (15) of the grease conveyor chute (6) is in contact with a wall of the box shaped body (2);
wherein at least the inclined side wall (14) is set freely facing the heat source (9) so as to deflect and convey the heat and the combustion smokes towards the cooking surface (3, 4) .

2. The barbecue (1) as claimed in claim 1, wherein the grease conveyor chute (6) rests on at least two supporting brackets (10) set at a distance apart from one another and constrained on one side to a beam (11) supporting the cooking surface (3, 4) and on another side to a horizontal supporting beam (12).

3. The barbecue (1) as claimed in claim 1, wherein the chute base (16) is inclined with respect to the horizontal plane of the ground in such a way as to identify a raised rear edge connected to the vertical rear wall (13) and a lower front edge (21) set facing the lateral tank (8).

4. The barbecue (1) as claimed in claim 3, wherein the chute base (16) is inclined with respect to the horizontal plane of the ground in such a way as to identify a raised lateral edge connected to the vertical side wall (15) and a lowered lateral edge connected to the inclined side wall (14) for defining a groove (22) for collecting and draining off the grease.

5. The barbecue (1) as claimed in claim 4, wherein the supporting brackets (10) have profiles complementary to the inclined conformation of the inclined side wall (14) and of the chute base (16) of the grease conveyor chute (6).

6. The barbecue (1) as claimed in any foregoing claims, wherein the tank (8) is removable and accessible by means of a mobile lid (17).

## Patentansprüche

1. Grill (1) zum Kochen von Speisen; wobei der Grill (1) umfasst:
- einen kastenförmigen Körper (2);
- zumindest eine Kochfläche (3, 4), die auf dem kastenförmigen Körper (2) aufliegt und in einer gegenüber einer horizontalen Ebene geneigten Position so gelagert ist, dass sie eine erhöhte Kante und eine untere Kante (7) identifiziert;
- eine Brennkammer, die durch den kastenförmigen Körper (2) und durch die Kochfläche (3, 4) begrenzt ist;
- eine Wärmequelle (9), die in der Brennkammer (5) untergebracht ist; und
- eine Fettförderschurre bzw. -rutsche (6), die in dem kastenförmigen Körper untergebracht ist und seitlich mit der unteren Kante (7) der Kochfläche (3, 4) zum Aufnehmen des Fettes und vorne mit einem Tank (8) zum Ablassen des Fettes verbunden ist; wobei die Fettförderschurre (6) einen Abschnitt aufweist, welcher der Wärmequelle (9) frei zugewandt ist, um die Wärme und den Verbrennungsrauch zu der Kochfläche (3, 4) hin umzulenken und zu befördern;
wobei die Fettförderschurre (6) abnehmbar ist;
wobei die Fettförderschurre (6) eine geneigte Seitenwand (14) zum Aufnehmen des von der Kochfläche (3, 4) kommenden Fettes, eine vertikale Seitenwand (15) und eine Schurren- bzw. Rutschenbasis (16) umfasst, die bzw. der hinten durch eine vertikale Rückwand (13) verschlossen und vorne offen ist und dem Seitentank (8) zugewandt ist;
**dadurch gekennzeichnet, dass**
die vertikale Seitenwand (15) der Fettförderschurre (6) mit einer Wand des kastenförmigen Körpers (2) in Kontakt ist;
wobei zumindest die geneigte Seitenwand (14) der Wärmequelle (9) frei zugewandt ist, um die Wärme und den Verbrennungsrauch zu der Kochfläche (3, 4) hin umzulenken und zu befördern.

2. Grill (1) nach Anspruch 1, wobei die Fettförderschurre (6) auf zumindest zwei Stütz- bzw. Trägerhalterungen (10) aufliegt, die voneinander beabstandet und auf einer Seite an einem Balken (11), der die Kochfläche (3, 4) stützt bzw. trägt, und auf der anderen Seite an einem horizontalen Stütz- bzw. Trägerbalken (12) gehalten sind.

3. Grill (1) nach Anspruch 1, wobei die Schurrenbasis (16) in Bezug auf die horizontale Ebene des Bodens derart geneigt ist, dass sie eine mit der vertikalen Rückwand (13) verbundene erhöhte Hinterkante und eine untere Vorderkante (21) identifiziert, die dem Seitentank (8) zugewandt ist.

4. Grill (1) nach Anspruch 3, wobei die Schurrenbasis (16) in Bezug auf die horizontale Ebene des Bodens derart geneigt ist, dass sie eine mit der vertikalen Rückwand (13) verbundene erhöhte Seitenkante und eine untere Seitenkante identifiziert, die mit der geneigten Seitenwand (14) verbunden ist, um eine Nut (22) zum Sammeln und Ablassen des Fettes zu definieren.

5. Grill (1) nach Anspruch 4, wobei die Trägerhalterungen (10) zu der geneigten Ausgestaltung der geneigten Seitenwand (14) und der Schurrenbasis (16) der Fettförderschurre (6) komplementäre Profile aufweisen.

6. Grill (1) nach einem der vorhergehenden Ansprüche, wobei der Tank (8) entfernbar ist und mittels eines beweglichen Deckels (17) zugänglich ist.

## Revendications

1. Barbecue (1) pour la cuisson d'aliments ; le barbecue (1) comprenant :
- un corps en forme de boîte (2) ;
- au moins une plaque de cuisson (3, 4) qui repose sur le corps en forme de boîte (2) et qui est supportée dans une position inclinée par rapport à un plan horizontal de manière à identifier un bord surélevé et un bord inférieur (7) ;
- une chambre de combustion délimitée par le corps en forme de boîte (2) et par la plaque de cuisson (3, 4) ;
- une source de chaleur (9) logée dans la chambre de combustion (5) ; et
- une goulotte de transport de graisse (6), qui est logée dans le corps en forme de boîte et qui est reliée latéralement au bord inférieur (7) de la plaque de cuisson (3, 4) pour recevoir la graisse, et à l'avant d'un bac (8) pour évacuer la graisse ; la goulotte de transport de graisse (6) présentant une partie placée librement face à la source de chaleur (9) de manière à dévier et à acheminer la chaleur et les fumées de combustion vers la plaque de cuisson (3, 4) ; la goulotte de transport de graisse (6) étant amovible ;
la goulotte de transport de graisse (6) comprenant une paroi latérale inclinée (14) destinée à recevoir la graisse provenant de la plaque de cuisson (3, 4), une paroi latérale verticale (15), et une base de goulotte (16) fermée à l'arrière par une paroi arrière verticale (13) et ouverte à l'avant et placée face au bac latéral (8) ;
**caractérisé en ce que**
la paroi latérale verticale (15) de la goulotte de transport de graisse (6) est en contact avec une paroi du corps en forme de boîte (2) ; au moins la paroi latérale inclinée (14) étant placée librement face à la source de chaleur (9) de manière à dévier et à acheminer la chaleur et les fumées de combustion vers la plaque de cuisson (3, 4).

2. Barbecue (1) selon la revendication 1, la goulotte de transport de graisse (6) reposant sur au moins deux consoles de support (10) placées à distance l'une de l'autre et fixées d'un côté à une poutre (11) supportant la plaque de cuisson (3, 4) et de l'autre côté à une poutre de support horizontale (12).

3. Barbecue (1) selon la revendication 1, la base de la goulotte (16) étant inclinée par rapport au plan horizontal du sol de manière à identifier un bord arrière surélevé relié à la paroi arrière verticale (13) et un bord avant inférieur (21) placé face au bac latéral (8).

4. Barbecue (1) selon la revendication 3, la base de la goulotte (16) étant inclinée par rapport au plan horizontal du sol de manière à identifier un bord latéral surélevé relié à la paroi latérale verticale (15), et un bord latéral abaissé relié à la paroi latérale inclinée (14) pour définir une rainure (22) destinée à collecter et à évacuer la graisse.

5. Barbecue (1) selon la revendication 4, les consoles de support (10) présentant des profils complémentaires à la conformation inclinée de la paroi latérale inclinée (14) et de la base de goulotte (16) de la goulotte de transport de graisse (6).

6. Barbecue (1) selon l'une quelconque des revendications précédentes, le bac (8) étant amovible et accessible au moyen d'un couvercle mobile (17).
